# EUROPÄISCHE PATENTANMELDUNG

(11) **EP 1 093 836 A1**
(43) Veröffentlichungstag der Anmeldung: **25.04.2001**
(21) Anmeldenummer: 99810956.5
(22) Anmeldetag: 21.10.1999
(51) Int. Cl.: B01D 19/00, B01D 5/00

(54) **Entgasungssystem für Kraftwerke**

(71) Anmelder: ABB (Schweiz) AG, 5401 Baden (CH)
(72) Erfinder: Baumann, Peter, Dr., 5085 Sulz (CH); Blangetti, Francisco, Dr., 5400 Baden (CH); Novak, Walter, 5426 Lengnau (CH)
(74) Vertreter: Pöpper, Evamaria, Dr.

(57) **Zusammenfassung**

Ein Kraftwerk, dem grosse Mengen von Prozessdampf entnommen und kontinuierlicher grosse Mengen von Zusatzwasser zugeführt werden, weist ein Entgasungssystem (5) für das zugeführte Zusatzwasser auf, das als Teilsystem des Kondensationssystems mit dem Kondensator (10) des Kraftwerks verbunden ist. Entlüftungspumpen (25) sind über eine erste Absaugleitung (15) mit dem Kondensator (10) und über eine zweite Absaugleitung (16) mit dem Entgasungssystem (5) verbunden und entfernt ein Gemisch von Dampf und nicht kondensierbaren Gasen aus dem Kraftwerk. In mindestens einer der zwei Leitungen (15, 16) ist ein Regelorgan (22, 23) wie zum Beispiel ein Regelventil, eine Regelblende oder eine nachjustierbare Drossel angeordnet, wodurch die Saugleistung in jener Leitung und die Verteilung der Saugleistung auf die beiden Leitungen (15, 16) während des Betriebs des Kraftwerks veränderbar ist.

## Beschreibung

### Technisches Gebiet

Die Erfindung betrifft Dampfkraftwerke, denen grosse Mengen von Wasser oder Prozessdampf für zum Beispiel Industriezwecke kontinuierlich aus deren Kreislauf entnommen werden. Das heisst es fallen deswegen keine oder nur geringe Kondensatmengen an. Solchen Kraftwerken werden zwecks Erhaltung der Wasser- und Dampfmengen in ihrem Kreislauf entsprechend grosse Mengen von Zusatzwasser kontinuierlich zugeführt, wobei das Zusatzwasser zunächst in einem Entgasungssystem entgast wird, das Teil des Kondensationssystems des Kraftwerks ist. Die Erfindung betrifft insbesondere ein System für die gleichzeitige Entlüftung des Dampfkondensators und des Entgasungssystems für das zugeführte Zusatzwasser.

### Stand der Technik

Kraftwerke mit grosser Prozessdampfentnahme für Industriezwecke sind allgemein bekannt. Solchen Kraftwerken werden grössere Mengen von Dampf während längerer oder der gesamten Betriebszeit entnommen. Bei verschiedenen Industrieverwendungen des Prozessdampfes, wie zum Beispiel in Papierfabriken, findet kein Rückfluss in den Wasser-Dampf-Kreislauf des Kraftwerks statt. Die Menge von Kondensat und Dampf im Kreislauf muss deshalb durch die kontinuierliche Zufuhr entsprechend grosser Mengen von Zusatzwasser aufrechterhalten werden.

Werden einem Kraftwerk nur kleine Mengen von Zusatzwasser und nur über eine kurze Zeit zugeführt, wird dieses Zusatzwasser in der Regel direkt dem Dampfkondensator zugeführt, indem es zum Beispiel über den Rohrbündeln versprüht und dort in vorhandenen Kühlern entgast wird. Das dort entstehende Dampf/Gas-Gemisch wird durch Entlüfter abgesaugt.
Werden hingegen einem Kraftwerk grosse Mengen von Zusatzwasser über eine lange Zeit oder kontinuierlich zugeführt, wird dieses Zusatzwasser zunächst in einem Entgasungssystem entgast und erst darauf dem Kondensator zugeführt. Sowohl Entgaser als auch Kondensator sind mit Entlüftungspumpen verbunden, welches das Dampf/Gas-Gemisch aus dem Kreislauf des Kraftwerks entfernt. Im Vergleich zu einem Kraftwerk mit geringer Zusatzwasserzufuhr sind die Anforderungen an die Leistung des Entlüftungssystems erhöht. Diese Leistungsanforderungen werden oft durch gewünschte Grenzwerte oder Wertbereiche für den Kondensatordruck sowie für den Sauerstoffgehalt im Kondensat, das aus dem Kondensator zur Wiederverwendung für die Dampfproduktion abgeleitet wird, bestimmt. Je tiefer diese gewünschten Grenzwerte und je grösser die Dampf- und Zusatzwassermengen, je grösser die Leistungsanforderung an das Absaugsystem.

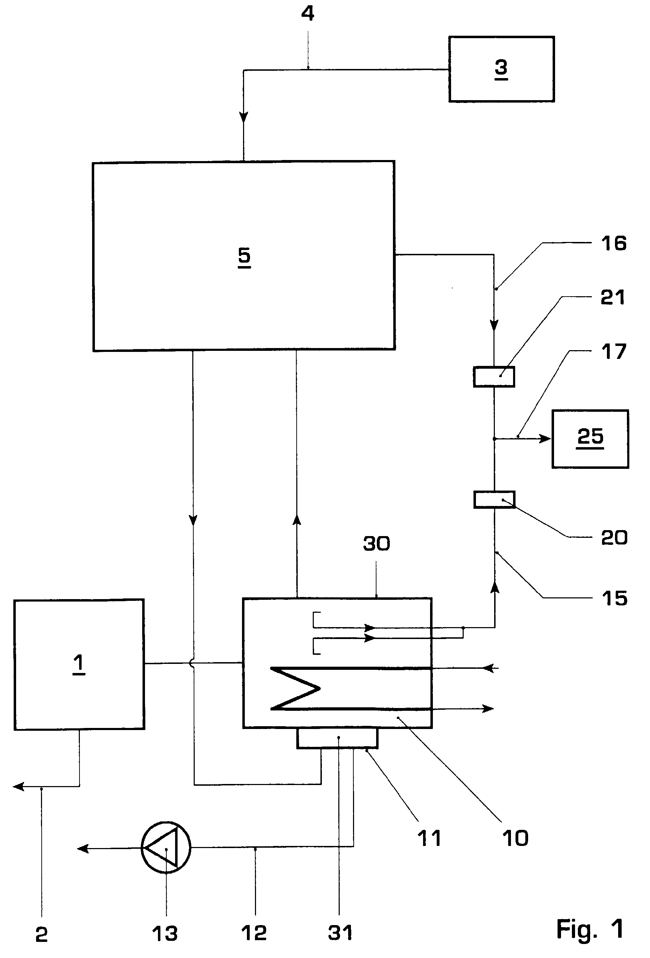

In Figur 1 ist schematisch ein Teil eines Dampfkraftwerks mit einem Beispiel eines Entlüftungssystems des Standes der Technik gezeigt, welches das Dampf/Gas-Gemisch aus einem Zusatzwasserentgaser sowie einem Kondensator entfernt. Ein Sauger ist dabei über zwei Leitungen mit den beiden Apparaten verbunden, wobei jede der beiden Leitungen eine Blende mit einer vorgegebenen Öffnungsgrösse aufweist, durch welche die Saugkapazität an den einzelnen Teilsystemen vorgegeben wird. Die Grösse dieser einzelnen Blenden sowie das Verhältnis der beiden Blendengrössen sind dann bei einer bestimmten Betriebslast des Kraftwerks, also einer bestimmten Dampfmenge zum Kondensator, und bei einer bestimmten Zusatzwassermenge derart, dass sich ein Sauerstoffgehalt im Kondensat sowie ein Kondensatordruck in den jeweils erwünschten Bereichen einstellt.

Bei Kraftwerken mit Prozessdampfentnahme für Industriezwecke kann aber die Menge der Prozessdampfentnahme und der Zusatzwasserzufuhr über die Zeit stark variieren. Zugleich kann auch der Strombedarf und dadurch die Dampfmenge zum Kondensator fluktuieren. Sind jedoch die Saugleistungen am Entgasungssystem und Kondensator durch die Blendengrössen vorgegeben während die Dampfmengen und Zusatzwassermengen sich verändern, ist nicht gewährleistet, dass das Gesamtsystem optimal eingestellt ist. Eine vorgegebene Verteilung der Saugleistung auf Kondensator und Entgaser kann zum Beispiel zu einem sehr niedrigen Sauerstoffgehalt im Kondensat weit unter dem erwünschten Grenzwert führen, während aber die Entlüftung des Kondensators ungenügend ist, sodass sich der Kondensatordruck erhöht. Dies bewirkt eine Reduzierung der Kondensatorleistung und eine damit einhergehende Einbusse an elektrischer Leistung.
Um dem Risiko ungenügender Saugleistung vorzubeugen kann die Gesamtleistung des Entlüftungssystems genügend gross ausgelegt werden, so dass bei jedem möglichen Strombedarf sowie bei jeder möglichen zugeführten Zusatzwassermenge eine genügende Saugleistung vorhanden ist. Dies würde jedoch bei tieferen Betriebslasten und kleinen Zusatzwassermengen zu einer Überkapazität des Entlüftungssystems und unnötigen Investitions- und Betriebskosten führen.

### Darstellung der Erfindung

Es ist die Aufgabe der Erfindung, für Kraftwerke der eingangs genannten Art ein System für eine gleichzeitige Entlüftung des Entgasers und des Kondensators zu schaffen, bei der die gesamte Saugleistung sowie die Verteilung der Saugkapazitäten auf die einzelnen Teilsysteme optimiert ist, sodass bei Fluktuation des Strombedarfs und der zugeführten Zusatzwassermenge der Sauerstoffgehalt im Kondensat des Kondensators und der Kondensatordruck unter vorgegebenen Grenzwerten bleibt. Es sollen dabei keine Überkapazitäten der Saugleistungen des Entlüftungssystems und dadurch verursachte Kosten entstehen.

Diese Aufgabe wird durch ein Kraftwerk gemäss Anspruch 1 gelöst.
Ein Kraftwerk mit grosser Prozessdampfentnahme und kontinuierlicher Zusatzwasserzufuhr weist ein Entgasungssystem für das zugeführte Zusatzwasser auf, das als Teilsystem des Kondensationssystems mit dem Kondensator verbunden ist. Das Kraftwerk weist ferner ein System mit Entlüftungspumpen und mindestens zwei Leitungen auf, wovon eine erste Leitung die Entlüftungspumpen und den Kondensator und eine zweite Leitung die Entlüftungspumpen und das Entgasungssystem verbinden. Die Erfindung besteht darin, dass in mindestens einer der Leitungen, welche die Entlüftungspumpen mit den zu entlüftenden Apparaten verbinden, ein Regelorgan wie zum Beispiel ein Regelventil, eine Regelblende oder eine nachjustierbare Drossel angeordnet ist, wodurch die Saugleistung in jener Leitung oder jenen Leitungen während des Betriebs des Kraftwerks veränderbar ist.

Durch das Regelventil oder die nachjustierbare Drossel wird die Verteilung der Saugleistungen in den einzelnen Leitungen durch Veränderung der Öffnungsgrösse in jener Leitung reguliert bzw. eingestellt. Die Regulierung und Nachjustierung findet dabei über einen automatischen Regelkreis oder manuell aufgrund von Messgrössen im Wasser-Dampf-Kreislauf statt, insbesondere dem Druck im Kondensator und/oder dem Sauerstoffgehalt im Kondensat oder Zusatzwassersystem.
Durch Einstellung der Verteilung der Saugleistungen wird bewirkt, dass der Sauerstoffgehalt sowie der Kondensatordruck innerhalb ihrer gewünschten Bereiche zu liegen kommen oder einen Richtwert erreichen.

In einer ersten Ausführung ist in der Leitung der Entlüftungspumpen zum Kondensator ein Regelventil, eine Regelblende oder eine einstellbare Drossel angeordnet, wobei die Leitung vom Entgasungssystem eine Blende mit vorgegebener Öffnungsgrösse aufweist. Die Entlüftung des Kondensators wird hierdurch entsprechend dem gemessenen Kondensatordruck reguliert bzw. eingestellt, sodass dieser einen gewünschten Richtwert erreicht oder diesen unterschreitet. Die Blendengrösse in der Leitung vom Entgasungssystem wird so ausgelegt, dass bei vorgegebener Gesamtsaugleistung der Entlüftungspumpen auch bei maximaler Menge von zugeführtem Zusatzwasser und maximaler Öffnung des Regelorgans in der ersten Leitung ein Sauerstoffgehalt im Kondensat im gewünschten Richtbereich erzielt wird.

In einer zweiten Ausführung ist ein Regelorgan in der Leitung vom Entgasungssystem angeordnet, während die Leitung vom Kondensator eine Blende mit gegebener Öffnung aufweist. Die Entlüftung des Entgasungssystems wird entsprechend dem Sauerstoffgehalt im Kondensat geregelt oder eingestellt. Die Grösse der Blende in der Leitung vom Kondensator wird dabei so ausgelegt, dass bei allen Lastpunkten und die dabei dem Kondensator zugeführten Dampfmengen der Kondensatordruck im gewünschten Richtbereich zu liegen kommt.

In einer weiteren Ausführung weisen beide Leitungen, jene vom Kondensator sowie jene vom Entgasungssystem ein Regelventil, eine Regelblende oder einstellbare Drossel auf. Hier werden beide Saugleitungen gemäss Kondensatordruck und Sauerstoffgehalt im Kondensat geregelt. Dadurch ist eine feinere Optimierung der Saugleistungen und ihres Verhältnisses und der dadurch erreichbaren Sauerstoffgehalte bzw. Kondensatordrücke möglich.

In weiteren Ausführungen sind mehr als zwei zu entlüftende Apparate vorhanden, wobei die Leitung zu dem einen Apparat, zu mehreren oder zu sämtlichen Apparaten ein Regelventil oder eine Regelblende aufweisen, mit dem die Saugkapazitäten individuell reguliert werden.

Der Vorteil des erfindungsgemässen Entlüftungssystems liegt in erster Linie darin, dass die gesamte Saugleistung der Entlüftungspumpen in allen Betriebsfällen optimal auf die einzelnen Leitungen und Apparate verteilt ist. Der Sauerstoffgehalt im Kondensat sowie der Kondensatordruck können dadurch gleichzeitig in ihrem Richtbereich gehalten werden. Erhöhte Kondensatordrücke und dadurch verursachte Leistungsverluste können dadurch vermieden werden, und die Gesamtleistung des Kraftwerks kann auch bei fluktuierenden Betriebslasten und Zusatzwassermengen optimiert werden.

Die Regulierbarkeit der Verteilung der Saugleistungen in den einzelnen Leitungen erlaubt weiter eine Optimierung der Gesamtleistung der Entlüftungspumpen. Diese ist nicht mehr für den Extremfall bezüglich Strombedarf und Zusatzwassermenge bei vorgegebenen Öffnungsgrössen der Blenden auszulegen, sondern kann bei optimiertem Saugverhältnis kleiner ausgelegt werden, womit Kosten eingespart werden können.
Ferner kann die Verteilung der Saugleistung nach einer Test-inbetriebnahme des Kraftwerks eingestellt oder nachjustiert werden und braucht nicht mehr gemäss Berechnung bereits vor der Inbetriebnahme festgelegt werden.

### Kurze Beschreibung der Zeichnungen

Es zeigen:
Figur 1 ein Schema eines Teils eines Dampfkraftwerks gemäss dem Stand der Technik, wovon das Kondensationssystem, Entgasungssystem für Zusatzwasser und Entlüftungspumpen für die beiden Apparate gezeigt sind.
Figur 2 ein Schema eines Teils eines Dampfkraftwerks der gleichen Art mit einem System für die erfindungsgemässe Entlüftung des Kondensators und des Vakuum-Entgasungssystems,
Figur 3 ein Beispiel einer regelbaren oder einstellbaren Blende in Anwendung im erfindungsgemässen Entlüftungssystem.

### Wege der Ausführung der Erfindung

Das Schema in Figur 1 zeigt einen Teil eines Kraftwerks, aus dessen Turbine 1 über eine Leitung 2 grosse Mengen von Prozessdampf entnommen werden. Die Wassermenge im Wasser-Dampf-Kreislauf des Kraftwerks wird durch Zusatzwasser aus einem Zusatzwasserbehälter 3 aufrechterhalten. Das Zusatzwasser wird über eine Leitung 4 zu einem Entgasungssystem 5 geführt, wonach es dem Kondensator 10 zugeführt wird. Das im Kondensator anfallende Kondensat wird im Hotwell 11 gesammelt und über die Leitung 12 und die Pumpe 13 schliesslich dem Kessel zugeführt. Im Kondensator 10 sind Kühler angeordnet, in denen nicht kondensierende Gase angesammelt werden, welche als Dampf/Gas-Gemisch über eine Absaugleitung 15 abgesaugt werden. Das Entgasungssystem 5 verfügt ebenfalls über eine Leitung 16, über die ebenfalls ein Dampf/Gas-Gemisch abgesaugt wird. Die Absaugleitungen 15 und 16 sind mit Entlüftungspumpen 25 verbunden, welches das Gemisch von Dampf und nicht kondensierbaren Gasen aus dem Kreislauf entfernt. Die Leitungen 15 und 16 weisen je eine Blende 20 bzw. 21 auf, deren einzelne Öffnungsgrössen gemäss eines Betriebspunktes bezüglich Betriebslast des Kraftwerks, Zusatzwassermenge und verlangten Werten für Kondensatordruck und Sauerstoffgehalt im Kondensat vorgegeben sind. Der Kondensatordruck wird jeweils an dem Messpunkt 30 am Kondensator, der Sauerstoffgehalt im Kondensat am Messpunkt 31 im Hotwell 11 und/oder in der Kondensatleitung 12 vor der Pumpe 13 festgestellt.

Der Kondensatordruck am Messpunkt 30 ist für die Kondensatorleistung und elektrische Leistung des Kraftwerks, der Sauerstoffgehalt im Kondensat am Messpunkt 31 für die Qualität des Wassers und Dampfes im Kreislauf ausschlaggebend. Die absoluten sowie relativen Öffnungsgrössen der Blenden 20 und 21 werden entsprechend der verlangten Werte für Kondensatordruck und Sauerstoffgehalt bestimmt. Dabei werden die Öffnungsgrössen so gewählt, dass bei den verschiedenen Betriebslasten und Mengen von zugeführtem Zusatzwasser diese Werte möglichst erreicht oder unterschritten werden. Hierfür werden zum Beispiel zwei Dampfstrahlsauger eingesetzt, durch welche die erforderliche Saugleistung im Extremfall erreicht werden kann.

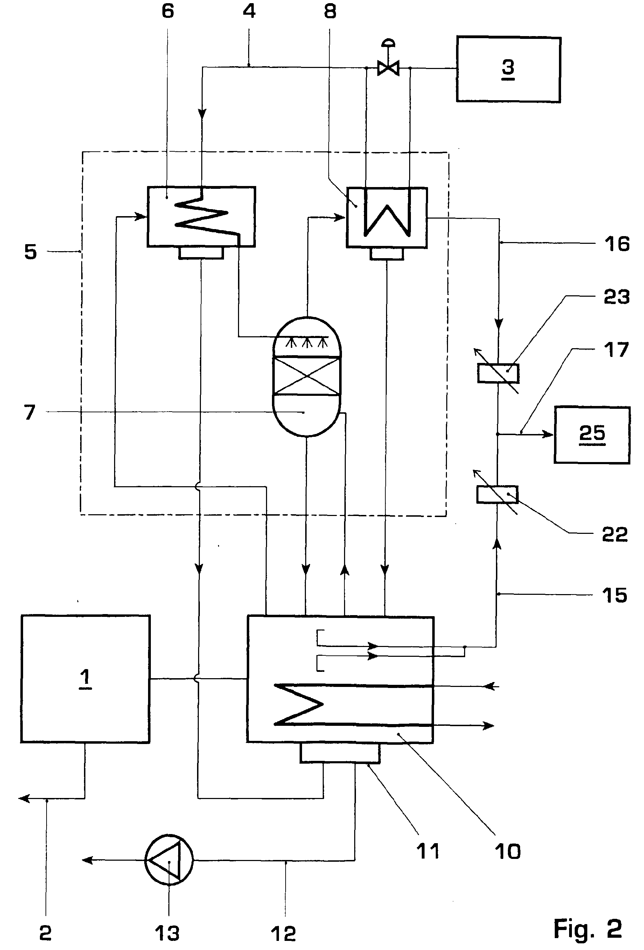

Figur 2 zeigt ein Schema eines Teils Kraftwerks der gleichen Art wie in Figur 1 mit grosser Prozessdampfentnahme und einem System für die Zufuhr und Entgasung von grossen Mengen von Zusatzwasser, das kontinuierlich dem Wasser-Dampf-Kreislauf zugeführt wird. Es weist wiederum Entlüftungspumpen 25 auf für die Absaugung eines Dampf/Gas-Gemischs aus dem Entgasungssystem 5 und dem Kondensator 10. Das Entgasungssystem 5 besteht dabei zum Beispiel aus einem Zusatzwasservorwärmer 6 und einem ihm nachgeschalteten Vakuumentgaser 7 und Abluftkondensator 8.
Die Entlüftungspumpen 25 sind wiederum über die Leitungen 15 und 16 mit dem Kondensator 10 bzw. mit Entgasungssystem 5 verbunden. Erfindungsgemäss ist in der Absaugleitung 15 zum Kondensator ein Regelorgan 22 wie zum Beispiel eine Regelblende, ein Regelventil oder eine manuell einstellbare Drossel angeordnet. Die Öffnung einer Regelblende oder eines Regelventils wird gemäss den Messwerten des Kondensatordrucks am Messpunkt 30 über einen Regelkreis geregelt. Ist der Kondensatordruck zum Beispiel erhöht wird die Blende 22 in der Leitung 15 zum Kondensator 10 vergrössert. Ist der Kondensatordruck sehr tief, wird die Blende etwas geschlossen, sodass die Saugleistung zum Entgasungssystem nicht zu tief fällt. Im Fall einer manuell einstellbaren Drossel, wird die Blendenöffnung zunächst gemäss Berechnung eingestellt. Eine Optimierung der Blendenöffnung wird nach Inbetriebnahme durch manuelle Einstellung der Drossel vorgenommen. Der Sollwert des Kondensatordrucks kann zum Beispiel den jeweiligen Betriebszuständen des Kraftwerkes nachgeführt werden. Dies zum Beispiel in Abhängigkeit von Kühlwassereintrittstemperatur und der Turbinenleistung.

Die gesamte Saugleistung des Entlüftungssystems ist beispielsweise zu 2/3 auf die Leitung zum Kondensator und zu 1/3 auf die Leitung zum Entgasungssystem verteilt. In bezug auf die erzeugte Leistung des Kraftwerks ist der Kondensatordruck im Vergleich zum Sauerstoffgehalt im Kondensat der kritischere Faktor. Aus diesem Grund ist in einer bevorzugten Ausführung der Erfindung die Leitung 15 zum Kondensator 10 mit einer Regelblende oder einer einstellbaren Drossel 22 ausgestattet. Die Absaugleitung 16 zum Entgasungssystem 5 weist anderseits eine Blende 23 mit vorgegebener und unveränderbarer Öffnung auf, da die Saugleistung in dieser Leitung im Vergleich zu der in der Leitung zum Kondensator weniger kritisch ist.

In einer weiteren Ausführung ist in beiden Leitungen 15 und 16 je ein Regelorgan 22 und 23 angeordnet. Es werden hier die Saugleistungen in beiden Leitungen geregelt bzw. nachjustiert. Beispielsweise ist in der Leitung 15 zum Kondensator eine Regelblende angeordnet, deren Öffnung über einen Regelkreis gemäss dem Kondensatordruck geregelt wird. In der Leitung 16 zum Entgasungssystem ist eine einstellbare Drossel angeordnet, die nach Inbetriebnahme gemäss Sauerstoffgehaltswerten manuell fein eingestellt wird. Liegt beispielsweise der Sauerstoffgehalt im Kondensat über dem verlangten Grenzwert, wird entsprechend die Blende 23 in der Leitung 16 zum Entgasungssystem vergrössert, um die Saugleistung zu erhöhen, bis der Sauerstoffgehalt den Grenzwert erreicht oder unterschreitet. Dabei kann das Verhältnis der Saugleistungen in den beiden Leitungen, wie schon erwähnt, in dem für das Kraftwerk günstigsten Betriebspunkt eingestellt werden.

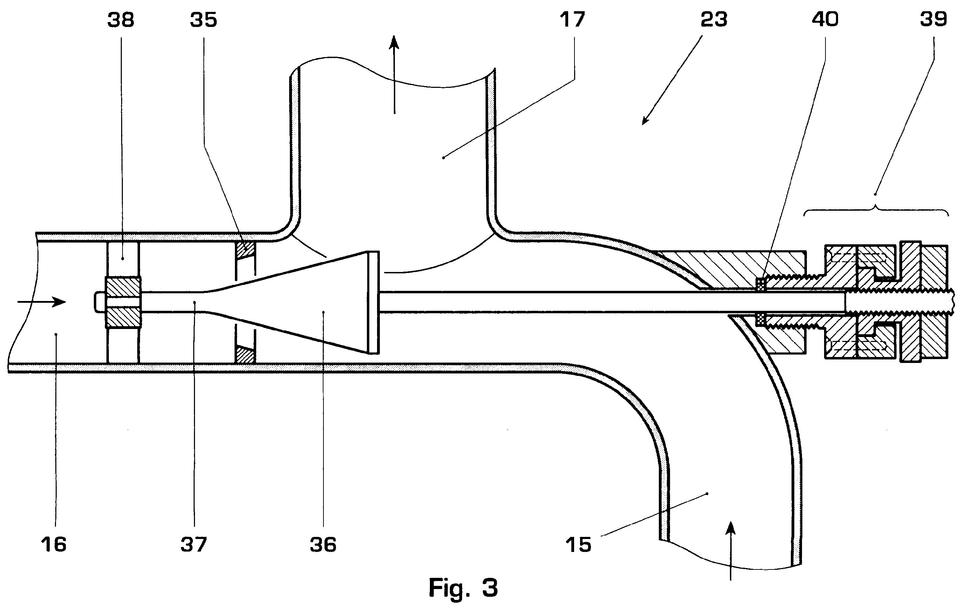

In Figur 3 ist ein Beispiel eines Regelorgans dargestellt zur Ausführung der Erfindung. Eine Leitung 17, welche zu den Entlüftungspumpen führt ist in einem T in zwei Teilleitungen geteilt, die Leitung 15 zum Kondensator und die Leitung 16 zum Entgasungssystem. In der Leitung 16 ist eine Blende 35 angeordnet, deren Öffnung durch einen Kegel 36 veränderbar ist. Der Kegel 36 ist über eine Spindel 37 durch ein Zentrierstück 38 und eine Abdichtung 40 gelagert ist. Die Lage des Kegels 36 in bezug auf die Blende 35 ist durch ein Fixierelement 39 manuell verschiebbar, wodurch die Blendenöffnung sich vergrössern oder verkleinern lässt.

Durch die Regelung oder Fein-Einstellung der einzelnen Blendenöffnungen und der Verteilung der Saugleistung auf die beiden Leitungen 15 und 16 können einerseits die Werte des Kondensatordrucks und Sauerstoffgehalts optimiert werden. Anderseits kann die gesamte erforderliche Leistung des Entlüftungssystems optimiert werden und beispielsweise das Entlüftungssystem nur durch einen anstelle von zwei Dampfstrahlsaugern ausgerüstet werden.

Der Sauerstoffgehalt des Kondensats wird gemäss einer ersten Methode im Hotwell 11 des Kondensators 10 vor der Kondensatpumpe 13 gemessen. An diesem Punkt ist der Wert des Sauerstoffgehalts unverfälscht. Eine Messung nach der Kondensatpumpe 13 würde Ungenauigkeiten oder Unsicherheiten bezüglich des Messwertes aufgrund von möglichen Leckagen im Systembereich der Pumpen beinhalten.
Die Messung des Sauerstoffgehalts im Hotwell 11 ist jedoch aufgrund des Unterdrucks mit Schwierigkeiten verbunden. Zur Umgehung dieser Schwierigkeiten, lässt sich der Sauerstoffgehalt gemäss einer alternativen, indirekten Methode feststellen. Anstelle einer direkten Messung des Sauerstoffgehalts im Kondensat werden die aus dem Kondensat und dem Zusatzwasser abzuführenden Sauerstoffmengen mittels einer Messung der zugeführten Menge von Zusatzwasser indirekt festgestellt und danach die Blendenöffnungen entsprechend eingestellt.
Hierzu werden Kalibrationswerte für das vorliegende Kraftwerk erstellt. Es werden für jede zugeführte Zusatzwassermenge die notwendigen Blendenöffnungen bestimmt, welche die jeweilige optimale Aufteilung der Saugleistung zwischen Entgaser und Kondensator bewirken, wodurch ein Sauerstoffgehalt im Kondensat sowie ein Kondensatordruck in den gewünschten Bereichen erzielt wird. Solche Kalibrationswerte werden für alle Betriebszustände und Betriebslasten erstellt, wie zum Beispiel für verschiedene Betriebslasten gemäss Strombedarf und für verschiedene Betriebszustände gemäss verschiedenen Mengen entnommenem Prozessdampfes und zugeführten Zusatzwassers.

Die Erfindung lässt sich auch in Kraftwerken mit mehr als zwei zu entlüftenden Apparaten anwenden. Dem Entlüftungssystem kann zum Beispiel ein weiterer Vakuumentgaser angeschlossen werden. In einer Ausführung wird zum Beispiel die Verteilung der Saugleistung durch eine Blende mit fixen Öffnungen in einer der Leitungen und einer Regelblende in jeder der beiden anderen Leitungen reguliert. In einer anderen Ausführung wird die Verteilung durch ein Regelorgan in jeder der drei Leitungen bestimmt.

Die Regelorgane 22 und 23 werden in weiteren Ausführungen der Erfindung gemäss anderen Betriebsgrössen eingestellt wie zum Beispiel dem Sauerstoffgehalt im Zusatzwasser, der Zu- oder Ablauftemperatur des Kühlwassers, der Kühlwassertemperaturerhöhung in ausgewählten Kühlrohren im Kondensator, der Dampfentnahme, der Zusatzwassermenge sowie auch der Generatorleistung.

### Bezugszeichenliste

- 1: Turbine
- 2: Leitung zum Kessel
- 3: Zusatzwasserbehälter
- 4: Leitung zum Entgasungssystem
- 5: Entgasungssystem
- 6: Zusatzwasservorwärmer
- 7: Vakuumentgaser
- 8: Abluftkondensator
- 10: Kondensator
- 11: Hotwell
- 12: Leitung
- 13: Pumpe
- 15: Absaugleitung zwischen Kondensator und Entlüftungssystem
- 16: Absaugleitung zwischen Entgasungssystem und Entlüftungssystem
- 20: Blende unveränderlicher Grössse
- 21: Blende unveränderlicher Grösse
- 22: Regelblende oder nachjustierbare Drossel
- 23: Regelblende oder nachjustierbare Drossel
- 25: Entlüftungspumpen
- 30: Messpunkt für Kondensatordruck
- 31: Messpunkt für Sauerstoffgehalt im Kondensat
- 35: Blende
- 36: Kegel
- 37: Spindel
- 38: Zentrierstück
- 39: Fixierelement
- 40: Abdichtung

## Patentansprüche

1. Kraftwerk mit einer Turbine (1) und einem Kondensator (10),
dem grosse Mengen von Prozessdampf entnommen und grosse Mengen von Zusatzwasser zugeführt werden,
mit einem Entgasungssystem (5) zur Entgasung des zugeführten Zusatzwassers, das als Teil des Kondensationssystems des Kraftwerks mit dem Kondensator (10) des Kraftwerks verbunden ist,
mit Entlüftungspumpen (25) zur Entlüftung des Kondensators (10) und Entgasungssystems (5),
und mit mindestens zwei Leitungen, wovon eine erste Leitung (15) die Entlüftungspumpen (25) mit dem Kondensator (10) und eine zweite Leitung (16) die Entlüftungspumpen (25) mit dem Entgasungssystem (25) verbinden,
dadurch gekennzeichnet, dass
in mindestens einer der Leitungen (15, 16) ein Regelorgan (22, 23) zur Veränderung der Saugleistung während des Kraftwerkbetriebs in jener Leitung angeordnet ist.

2. Kraftwerk nach Anspruch 1,
dadurch gekennzeichnet, dass
das Regelorgan (22) in der ersten Leitung (15) angeordnet ist, welche die Entlüftungspumpen (25) mit dem Kondensator (10) verbindet,
und die zweite Leitung (16), welche die Entlüftungspumpen (25) mit dem Entgasungssystem (5) verbindet, eine Blende (21) mit vorgegebener Öffnungsgrösse aufweist.

3. Kraftwerk nach Anspruch 1,
dadurch gekennzeichnet, dass
das Regelorgan (23) in der zweiten Leitung (16) angeordnet ist, welche die Entlüftungspumpen (25) mit dem Entgasungssystem (5) verbindet, und die erste Leitung (15), welche die Entlüftungspumpen (25) mit dem Kondensator (10) verbindet, eine Blende (20) mit vorgegebener Öffnungsgrösse aufweist.

4. Kraftwerk nach Anspruch 1,
dadurch gekennzeichnet, dass
je ein Regelorgan (22, 23) in der ersten Leitung (15), welche die Entlüftungspumpen (25) mit dem Kondensator (10) verbindet, sowie in der zweiten Leitung (16), welche die Entlüftungspumpen (25) mit dem Entgasungssystem (5) verbindet, angeordnet ist.

5. Kraftwerk nach einem der Ansprüche 1 bis 4,
dadurch gekennzeichnet, dass
eine dritte Leitung die Entlüftungspumpen (25) mit dem Entgasungssystem (5) verbindet und diese dritte Leitung eine Blende mit vorgegebener Öffnungsgrösse aufweist.

6. Kraftwerk nach einem der Ansprüche 1 bis 4,
dadurch gekennzeichnet, dass
eine dritte Leitung die Entlüftungspumpen (25) mit dem Entgasungssystem (5) verbindet und diese dritte Leitung ein Regelorgan aufweist.

7. Kraftwerk nach einem der Ansprüche 1 bis 6,
dadurch gekennzeichnet, dass
das Regelorgan oder die Regelorgane (22, 23) aus einer Regelblende, einem Regelventil oder einer einstellbaren Drossel (22, 23) besteht.

8. Kraftwerk nach Anspruch 7,
dadurch gekennzeichnet, dass
die Regelblende oder das Regelventil (22, 23) gemäss Messwerten des Druckes im Kondensator (10) und/oder des Sauerstoffgehaltes im Kondensat im Kondensator (10) über einen Regelkreis geregelt wird.

9. Kraftwerk nach Anspruch 7,
dadurch gekennzeichnet, dass
die Regelblende oder das Regelventil (22, 23) gemäss dem Sauerstoffgehalt im Zusatzwasser, der Zu- oder Ablauftemperatur des Kühlwassers, der Kühlwassertemperaturerhöhung in ausgewählten Kühlrohren im Kondensator (10), der Dampfentnahme, der Zusatzwassermenge oder der Generatorleistung über einen Regelkreis geregelt wird.

10. Kraftwerk nach Anspruch 7,
dadurch gekennzeichnet, dass
die einstellbare Drossel (22, 23) gemäss Messwerten des Druckes im Kondensator (10) und/oder des Sauerstoffgehaltes im Kondensat im Kondensator (10) manuell eingestellt wird.

11. Kraftwerk nach Anspruch 7,
dadurch gekennzeichnet, dass
die einstellbare Drossel (22, 23) gemäss dem Sauerstoffgehalt im Zusatzwasser, der Zu- oder Ablauftemperatur des Kühlwassers, der Kühlwassertemperaturerhöhung in ausgewählten Kühlrohren im
Kondensator (10), der Dampfentnahme, der Zusatzwassermenge oder der Generatorleistung manuell eingestellt wird.
